# EUROPEAN PATENT SPECIFICATION

(11) **EP 4 467 865 B1**
(45) Date of publication and mention of the grant of the patent: **18.11.2026**
(21) Application number: 22922251.8
(22) Date of filing: 29.12.2022
(51) Int. Cl.: F21S 2/00, F21V 7/09, F21V 7/22, F21V 8/00, F21V 9/32, F21V 9/40, G03B 21/14, H01S 3/067, F21Y 115/30, G02B 6/00, G03B 21/20, H05B 45/20, F21K 9/64, F21Y 113/10, H01S 3/16

(54) **LIGHT SOURCE SYSTEM**
LICHTQUELLENSYSTEM
SYSTÈME DE SOURCES LUMINEUSES

(30) Priority: 20.01.2022 JP 2022007477
(43) Date of publication of application: 27.11.2024
(73) Proprietor: Panasonic Intellectual Property Management Co., Ltd., Kadoma-shi, Osaka 571-0057 (JP)
(72) Inventor: MIZOKAMI, Yosuke, Kadoma-shi, Osaka 571-0057 (JP); NANAI, Norishige, Kadoma-shi, Osaka 571-0057 (JP); SATO, Toshihiko, Kadoma-shi, Osaka 571-0057 (JP)
(74) Representative: Müller-Boré & Partner Patentanwälte PartG mbB
(86) International application number: PCT/JP2022/048700
(87) International publication number: WO 2023/140101

(56) References cited:
- WO-A1-2021/014853
- WO-A1-2021/052900
- JP-A- 2003 174 220
- JP-A- 2022 002 180
- US-A1- 2009 067 453

## Description

### Technical Field

The present disclosure generally relates to a light source system. More particularly, the present disclosure relates to a light source system which uses excitation light.

### Background Art

Patent Literature 1 discloses, as a light source device, a light-emitting device including an optical fiber, a first light source unit, and a second light source unit. The optical fiber contains a wavelength converting material (wavelength-converting element) which is excited by excitation light to produce a spontaneous emission of light having a longer wavelength than the excitation light. The first light source unit makes the excitation light incident on a light incident portion of the optical fiber. The second light source unit makes seed light incident on the light incident portion of the optical fiber. The seed light causes a stimulated emission of light to be produced from the wavelength converting material that has been excited by either the excitation light or the amplified spontaneous emission of light. The first light source unit includes a laser light source (first solid-state light source). The second light source unit includes, for example, a seed light source (semiconductor laser diode) that emits a green light ray, a seed light source (semiconductor laser diode) that emits an orange light ray, and a seed light source (semiconductor laser diode) that emits a red light ray.

The light-emitting device of Patent Literature 1 further includes a control member for controlling respective intensities of the plurality of seed light rays emitted from the plurality of seed light sources.

The light source device of Patent Literature 1 requires solid-state light sources such as semiconductor laser diodes that emit seed light rays. Nevertheless, in some cases, semiconductor laser diodes for emitting light rays, of which the wavelengths correspond to the wavelength of the amplified spontaneous emission of light of a wavelength converting material, may be not available as manufactured products. In that case, seed light rays with the desired wavelengths may be not available.

### Citation List

### Patent Literature

Patent Literature 1: WO 2021/014853 A1

### Summary of Invention

An object of the present disclosure is to provide a light source system which may control the intensity and color of the emerging light even without using solid-state light sources that emit seed light rays.

A light source system according to an aspect of the present disclosure includes a first solid-state light source, a first wavelength converting member, a second solid-state light source, a second wavelength converting member, an optical member, a motor, and a control unit. The first solid-state light source emits first excitation light. The first wavelength converting member is an optical fiber containing a first wavelength-converting element. The first wavelength-converting element is excited by the first excitation light to produce first spontaneous emissions of light having multiple wavelengths longer than a wavelength of the first excitation light. The first wavelength-converting element is excitable by a first amplified spontaneous emission of light. The second solid-state light source emits second excitation light. The second wavelength converting member contains a second wavelength-converting element. The second wavelength-converting element is excited by the second excitation light to produce second spontaneous emissions of light having multiple wavelengths longer than a wavelength of the second excitation light. The second wavelength-converting element is excitable by a second amplified spontaneous emission of light. The optical member is interposed between the second wavelength converting member and the first wavelength converting member. The optical member includes a plurality of filter portions provided for light rays falling within multiple wavelength ranges, respectively. The motor rotates the optical member. The control unit controls the motor and the second solid-state light source. The optical member has the plurality of filter portions arranged side by side along a circumference of a circle. The circle is centered around a center axis of rotation of the optical member. Each of the multiple wavelength ranges includes a wavelength of at least one of the second spontaneous emissions of light having the multiple wavelengths which have been produced by the second wavelength converting member. The wavelength is at least one of the multiple wavelengths.

### Brief Description of Drawings

FIG. 1 illustrates a configuration for a light source system according to a first embodiment;
FIG. 2 is a cross-sectional view of an optical fiber serving as a first wavelength converting member in the light source system;
FIG. 3 is a cross-sectional view of an optical fiber serving as a second wavelength converting member in the light source system;
FIG. 4A is a plan view of a member including an optical member and a motor in the light source system;
FIG. 4B is a cross-sectional view of the member including the optical member and the motor in the light source system as taken along the plane X-X shown in FIG. 4A;
FIG. 4C is a cross-sectional view of the member including the optical member and the motor in the light source system as taken along the plane Y-Y shown in FIG. 4A;
FIG. 5 illustrates how the light source system operates;
FIG. 6 illustrates a configuration for a light source system according to a second embodiment;
FIG. 7A is a plan view of a member including an optical member and a motor in the light source system;
FIG. 7B is a cross-sectional view of the member including the optical member and the motor in the light source system as taken along the plane X-X shown in FIG. 7A; and
FIG. 7C is a cross-sectional view of the member including the optical member and the motor in the light source system as taken along the plane Y-Y shown in FIG. 7A.

### Description of Embodiments

The drawings to be referred to in the following description of first and second embodiments and their variations are all schematic representations. Thus, the ratio of the dimensions (including thicknesses) of respective constituent elements illustrated on the drawings does not always reflect their actual dimensional ratio.

### (First embodiment)

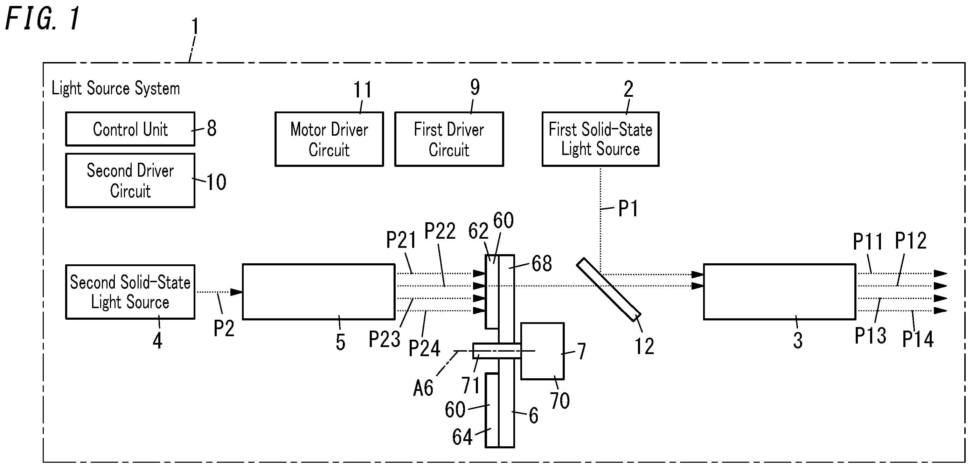

A light source system 1 according to a first embodiment will now be described with reference to FIGS. 1-5.

### (1) Overview

The light source system 1 includes a first solid-state light source 2, a first wavelength converting member 3, a second solid-state light source 4, a second wavelength converting member 5, an optical member 6, a motor 7, and a control unit 8 as shown in FIG. 1. The first solid-state light source 2 emits first excitation light P1. The first wavelength converting member 3 is an optical fiber containing a first wavelength-converting element (such as Pr³⁺). The first wavelength-converting element is excited by the first excitation light P1 to produce first spontaneous emissions of light having multiple wavelengths longer than a wavelength of the first excitation light P1. The first wavelength-converting element is also excitable by a first amplified spontaneous emission of light. The second solid-state light source 4 emits second excitation light P2. The second wavelength converting member 5 is an optical fiber containing a second wavelength-converting element (such as Pr³⁺). The second wavelength-converting element is excited by the second excitation light P2 to produce second spontaneous emissions of light having multiple wavelengths longer than a wavelength of the second excitation light P2. The second wavelength-converting element is also excitable by a second amplified spontaneous emission of light. The optical member 6 is interposed between the second wavelength converting member 5 and the first wavelength converting member 3. The optical member 6 includes a plurality of filter portions 60 provided for light rays falling within multiple wavelength ranges, respectively. The motor 7 rotates the optical member 6. The control unit 8 controls the motor 7 and the second solid-state light source 4. In the optical member 6, the plurality of filter portions 60 are arranged side by side along a circumference of a circle. The circle is centered around a center axis of rotation A6 of the optical member 6. Each of the multiple wavelength ranges includes a wavelength of at least one of the second spontaneous emissions of light having the multiple wavelengths which have been produced by the second wavelength converting member 5. The wavelength is at least one of the multiple wavelengths. The light source system 1 allows multiple types of light rays respectively having the same wavelengths as the second spontaneous emissions of light having the multiple wavelengths which have been produced by the second wavelength converting member 5 to be incident on the first wavelength converting member 3 as seed light rays that cause the first wavelength-converting element, excited by either the first excitation light P1 or the amplified spontaneous emission of light, to produce a stimulated emission of light. In FIG. 1, schematically shown are the optical paths of four types of seed light rays P21, P22, P23, P24 belonging to the multiple types of seed light rays.

The light emerging from the light source system 1 is the light emerging from the first wavelength converting member 3. In this light source system 1, light including the first excitation light P1 and the multiple types of stimulated emissions of light, for example, emerge from the first wavelength converting member 3. In FIG. 1, schematically shown are the optical paths of four types of stimulated emissions of light P11, P12, P13, P14 belonging to the multiple types of stimulated emissions of light.

The light source system 1 may be used, for example, for the purpose of lighting. Examples of lighting may include, without limitation, a downlight to be used indoors, a lighting system for use in cold storage warehouses, a lighting system for use in outdoor tennis courts, a lighting system for use in tunnels, a lighting system for use in fishing boats to collect fish, and headlights for vehicles. In addition, the light source unit does not have to be used for the purpose of lighting but is also applicable to a projection system including a projector, for example.

### (2) Configuration for light source system

As shown in FIG. 1, the light source system 1 includes the first solid-state light source 2, the first wavelength converting member 3, the second solid-state light source 4, the second wavelength converting member 5, the optical member 6, the motor 7, and the control unit 8. The light source system 1 further includes a first driver circuit 9, a second driver circuit 10, and a motor driver circuit 11. The first driver circuit 9 drives the first solid-state light source 2. The second driver circuit 10 drives the second solid-state light source 4. The motor driver circuit 11 drives the motor 7. The light source system 1 further includes an optical element 12. The optical element 12 may be, for example, a dichroic mirror.

### (2.1) First solid-state light source

The first solid-state light source 2 emits the first excitation light P1. The first solid-state light source 2 emits the first excitation light P1 to excite a first wavelength-converting element contained in the first wavelength converting member 3. The first excitation light P1 emitted from the first solid-state light source 2 is caused to be incident on the first wavelength converting member 3. More specifically, the first excitation light P1 emitted from the first solid-state light source 2 is incident on the first wavelength converting member 3.

The first solid-state light source 2 is a light source that emits semi-monochromatic light. As used herein, the "semi-monochromatic light" refers to light falling within a narrow wavelength range (of 10 nm, for example). The first solid-state light source 2 may include, for example, a laser light source. The laser light source emits a laser beam. The first excitation light P1 emitted from the first solid-state light source 2 (i.e., a laser beam emitted from the laser light source) is caused to be incident on the first wavelength converting member 3. The laser light source may be, for example, a semiconductor laser diode that emits a blue laser beam. In that case, the first excitation light P1 may have a wavelength falling within the range from 440 nm to 450 nm, for example.

### (2.2) First wavelength converting member

The first wavelength converting member 3 is an optical fiber containing a first wavelength-converting element (such as Pr³⁺). Thus, the first wavelength converting member 3 has flexibility. The first wavelength-converting element may be excited by the first excitation light P1 to produce first spontaneous emissions of light having multiple wavelengths longer than the wavelength of the first excitation light P1. The first wavelength-converting element may also be excited by the first amplified spontaneous emission of light.

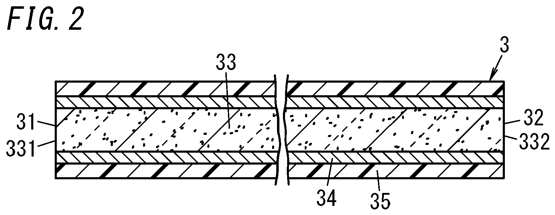

The first wavelength converting member 3 includes a core 33, a cladding 34, and a jacket 35 as shown in FIG. 2. The cladding 34 covers the outer peripheral surface of the core 33. The jacket 35 covers the outer peripheral surface of the cladding 34. A cross section, taken along a plane perpendicular to the optical axis, of the core 33 has a circular shape. The cladding 34 is arranged to be coaxial with the core 33.

The core 33 includes a light-transmitting material and the first wavelength converting element. In other words, the core 33 contains the first wavelength-converting element. The concentration of the first wavelength converting element in the core 33 may or may not be uniform along the entire length of the core 33. The core 33 may have a diameter of 25 µm to 500 µm, for example. The first wavelength converting member 3 may have a length of 3 m to 10 m, for example. The lower the concentration of the first wavelength-converting element in the first wavelength converting member 3 is, the longer the length of the first wavelength converting member 3 preferably is. The optical fiber serving as the first wavelength converting member 3 may have a numerical aperture of 0.22, for example.

The refractive index of the core 33 may be substantially equal to the refractive index of the light-transmitting material that is a main component of the core 33.

The light-transmitting material may be, for example, a fluoride, an oxide, or a nitride. The fluoride may be glass fluoride, for example. The oxide may be a silicon oxide or quartz, for example.

The first wavelength converting element is a rare earth element. In this embodiment, the first wavelength converting element includes an element selected from the group consisting of, for example, Pr, Tb, Ho, Dy, Er, Eu, Nd, and Mn. The first wavelength converting element is contained as an ion of a rare earth element in the core 33, e.g., contained as an ion of Pr (Pr³⁺) in the core 33. In this case, the first wavelength converting element may be excited by either the first excitation light P1 or the light produced by amplifying the spontaneous emission of light, emitted from another first wavelength converting element, as internal seed light, i.e., an amplified spontaneous emission (ASE) of light. Through such excitation, the first wavelength converting element emits not only an ASE unique to the first wavelength converting element but also multiple types of stimulated emissions of light having the same wavelengths as the multiple types of seed light rays P21-P24 coming from the second wavelength converting member 5, thus emitting the combination of these emissions as the stimulated emissions of light P11-P14. The wavelengths of the ASE and the seed light rays P21-P24 are longer than the wavelength of the first excitation light P1 (which may fall within the range from 440 nm to 450 nm, for example). The wavelengths of the multiple types of seed light rays P21-P24 will be described later in the "(2.4) Second wavelength converting member" section.

The refractive index of the cladding 34 is less than the refractive index of the core 33. The cladding 34 does not contain the first wavelength converting element contained in the core 33.

A material for the jacket 35 may be a resin, for example. The jacket 35 may have an outside diameter equal to or less than 1 mm, for example.

The first wavelength converting member 3 includes a light incident portion 31 and a light emerging portion 32. In the first wavelength converting member 3, a first end face 331 of the core 33 serves as the light incident portion 31 and a second end face 332 of the core 33 serves as the light emerging portion 32.

In the first wavelength converting member 3, the first excitation light P1 coming from the first solid-state light source 2 and the multiple types of seed light rays P21-P24 coming from the second wavelength converting member 5 are caused to be incident on the light incident portion 31. In the light source system 1, the first excitation light P1 coming from the first solid-state light source 2 is incident on the light incident portion 31 of the first wavelength converting member 3 after having been reflected from the optical element 12. In addition, the multiple types of seed light rays P21-P24 coming from the second wavelength converting member 5 are incident on the light incident portion 31 of the first wavelength converting member 3 via the optical element 12. The stimulated emissions of light P11-P14 including the ASE emerge from the light emerging portion 32 of the first wavelength converting member 3. In addition, the first excitation light P1 and the second excitation light P2 also emerge from the first wavelength converting member 3.

### (2.3) Second solid-state light source

The second solid-state light source 4 emits the second excitation light P2. The second solid-state light source 4 emits the second excitation light P2 to excite a second wavelength-converting element contained in the second wavelength converting member 5. The second excitation light P2 emitted from the second solid-state light source 4 is caused to be incident on the second wavelength converting member 5. More specifically, the second excitation light P2 emitted from the second solid-state light source 4 may be incident directly on the second wavelength converting member 5. However, this is only an example and should not be construed as limiting. Alternatively, the second excitation light P2 may also be incident on the second wavelength converting member 5 indirectly via an optical coupling member such as a lens.

The second solid-state light source 4 is a light source that emits semi-monochromatic light. As used herein, the "semi-monochromatic light" refers to light falling within a narrow wavelength range (of 10 nm, for example). The second solid-state light source 4 may include, for example, a laser light source. The laser light source emits a laser beam. The second excitation light P2 emitted from the second solid-state light source 4 (i.e., a laser beam emitted from the laser light source) is caused to be incident on the second wavelength converting member 5. The laser light source may be, for example, a semiconductor laser diode that emits a blue laser beam. In that case, the second excitation light P2 may have a wavelength of 440 nm to 450 nm, for example.

### (2.4) Second wavelength converting member

The second wavelength converting member 5 contains a second wavelength-converting element (such as Pr³⁺). In this light source system 1, the second wavelength converting member 5 may be an optical fiber containing the second wavelength-converting element. The second wavelength-converting element may be excited by the second excitation light P2 to produce second spontaneous emissions of light having multiple wavelengths longer than the wavelength of the second excitation light P2. The second wavelength-converting element may also be excited by the second amplified spontaneous emission of light.

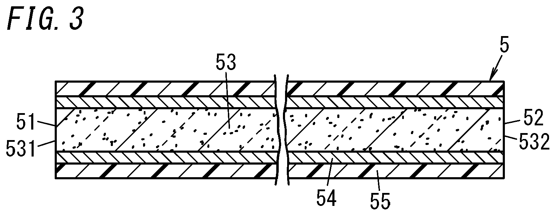

The second wavelength converting member 5 includes a core 53, a cladding 54, and a jacket 55 as shown in FIG. 3. The cladding 54 covers the outer peripheral surface of the core 53. The jacket 55 covers the outer peripheral surface of the cladding 54. A cross section, taken along a plane perpendicular to the optical axis, of the core 53 has a circular shape. The cladding 54 is arranged to be coaxial with the core 53.

The core 53 includes a light-transmitting material and the second wavelength converting element. In other words, the core 53 contains the second wavelength-converting element. The concentration of the second wavelength converting element in the core 53 may or may not be uniform along the entire length of the core 53. The core 53 may have a diameter of 25 µm to 500 µm, for example. The second wavelength converting member 5 may have a length of 3 m to 10 m, for example. The lower the concentration of the second wavelength-converting element in the second wavelength converting member 5 is, the longer the length of the second wavelength converting member 5 preferably is. The optical fiber serving as the second wavelength converting member 5 may have a numerical aperture of 0.22, for example.

The refractive index of the core 53 may be substantially equal to the refractive index of the light-transmitting material that is a main component of the core 53.

The light-transmitting material may be, for example, a fluoride, an oxide, or a nitride. The fluoride may be glass fluoride, for example. The oxide may be a silicon oxide or quartz, for example.

The second wavelength converting element is a rare earth element. In this embodiment, the second wavelength converting element includes an element selected from the group consisting of, for example, Pr, Tb, Ho, Dy, Er, Eu, Nd, and Mn. The second wavelength converting element is contained as an ion of a rare earth element in the core 53. The second wavelength-converting element may be the same type of element as the first wavelength-converting element, e.g., contained as an ion of Pr (Pr³⁺) in the core 53. In this case, the second wavelength converting element may be excited by either the second excitation light P2 or the light produced by amplifying the spontaneous emission of light, emitted from another second wavelength converting element, as internal seed light, i.e., an amplified spontaneous emission (ASE) of light. Through such excitation, the second wavelength converting element emits an ASE unique to the second wavelength converting element. The wavelengths of the ASE and the seed light rays P21-P24 are longer than the wavelength of the second excitation light P2 (which may fall within the range from 440 nm to 450 nm, for example).

The refractive index of the cladding 54 is less than the refractive index of the core 53. The cladding 54 does not contain the second wavelength converting element contained in the core 53.

A material for the jacket 55 may be a resin, for example. The jacket 55 may have an outside diameter equal to or less than 1 mm, for example.

The second wavelength converting member 5 includes a light incident portion 51 and a light emerging portion 52. In the second wavelength converting member 5, a first end face 531 of the core 53 serves as the light incident portion 51 and a second end face 532 of the core 53 serves as the light emerging portion 52.

In the second wavelength converting member 5, the second excitation light P2 coming from the second solid-state light source 4 is caused to be incident on the light incident portion 51. The stimulated emissions of light including the ASE emerge as seed light rays P21-P24 from the light emerging portion 52 of the second wavelength converting member 5. In addition, the second excitation light P2 also emerges from the second wavelength converting member 5.

If the second wavelength-converting element is Pr³⁺, then the second spontaneous emission of light produced by the second wavelength converting member 5 may include, for example, a spontaneous emission of light having a wavelength of 482 nm (a blue ray), a spontaneous emission of light having a wavelength of 532 nm (a green ray), a spontaneous emission of light having a wavelength of 605 nm (an orange ray), a spontaneous emission of light having a wavelength of 637 nm (a red ray), a spontaneous emission of light having a wavelength of 698 nm, and spontaneous emission of light having a wavelength of 719 nm (a near-infrared light ray).

The second wavelength converting member 5 lets multiple types of seed light rays P21-P24 (refer to FIG. 1) emerge therefrom. The multiple types of seed light rays P21-P24 emerging from the second wavelength converting member 5 are caused to be incident on the first wavelength converting member 3. More specifically, the multiple types of seed light rays P21-P24 emerging from the second wavelength converting member 5 are caused to be incident on the light incident portion 31 of the first wavelength converting member 3 via the optical member 6 and the optical element 12.

### (2.5) Optical member

The optical member 6 is interposed between the second wavelength converting member 5 and the first wavelength converting member 3 as shown in FIG. 1. More specifically, the optical member 6 is interposed between the second wavelength converting member 5 and the optical element 12. The optical element 12 may be a dichroic mirror as described above. The optical element 12 transmits the light coming from the optical member 6 toward the first wavelength converting member 3 and reflects the light coming from the first solid-state light source 2 toward the first wavelength converting member 3.

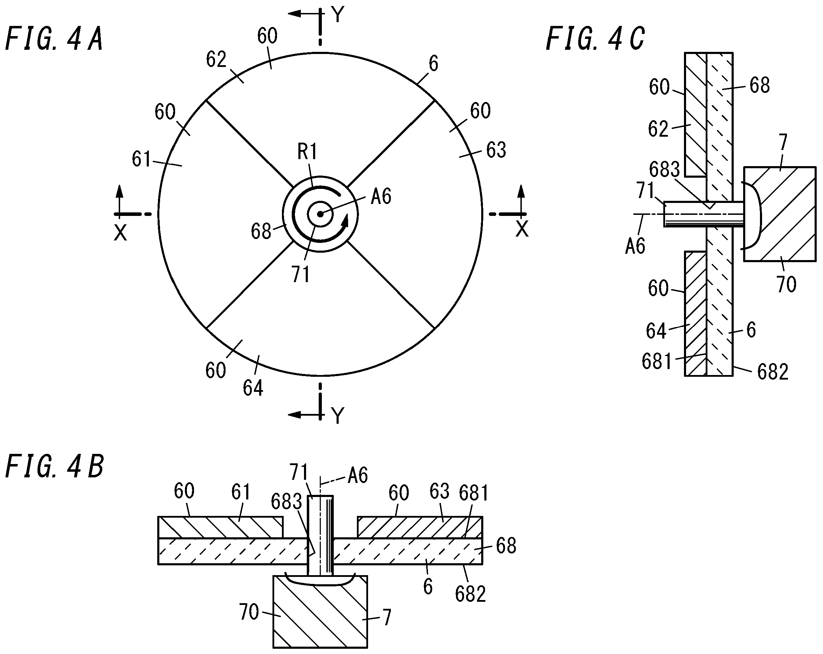

The optical member 6 includes a rotary plate 68 and a plurality of (e.g., four) filter portions 60 provided for light rays falling within multiple wavelength ranges as shown in FIGS. 4A-4C.

The rotary plate 68 is rotatable around the center axis of rotation A6 of the optical member 6. The center axis of rotation A6 is parallel to the direction in which the light emerging portion 52 of the second wavelength converting member 5 and the optical element 12 are arranged side by side (hereinafter referred to as a "predefined direction") (refer to FIG. 1). The light emerging portion 52 of the second wavelength converting member 5, the optical element 12, and the light incident portion 31 of the first wavelength converting member 3 are arranged in straight line in the predefined direction. The center axis of rotation A6 does not have to be exactly parallel to the predefined direction but may form, for example, an angle equal to or less than 5 degrees with respect to the predefined direction.

When viewed in the thickness direction defined for the rotary plate 68, the rotary plate 68 has a circular outer edge. The rotary plate 68 has a first principal surface 681 facing the second wavelength converting member 5 in the thickness direction defined for the rotary plate 68 and a second principal surface 682 opposite from the first principal surface 681. The rotary plate 68 may be coupled to, for example, the rotary shaft 71 of the motor 7 and rotates along with the rotary shaft 71 of the motor 7. In the optical member 6, part of the rotary shaft 71 of the motor 7 is located inside a center through hole 683 of the rotary plate 68. The rotary plate 68 is arranged such that the thickness direction defined for the rotary plate 68 is aligned with the center axis of rotation A6. The optical member 6 is arranged such that the point of incidence of the light emerging from the second wavelength converting member 5 on the optical member 6 is distant from the center axis of rotation A6 in a direction perpendicular to the center axis of rotation A6 of the optical member 6. The distance from the center axis of rotation A6 to the point of incidence is longer than the shortest distance from the center axis of rotation A6 to the filter portions 60 and shorter than the longest distance from the center axis of rotation A6 to the outer edge of the filter portions 60. The rotary plate 68 has a light transmitting property and transmits visible light. Thus, the rotary plate 68 transmits the multiple types of seed light rays P21-P24 emerging from the second wavelength converting member 5. The rotary plate 68 may be, but does not have to be, a glass substrate. Alternatively, the rotary plate 68 may also be a ceramic substrate or a resin substrate.

The plurality of filter portions 60 respectively include transmitting portions 61-64 that transmit light rays falling within multiple wavelength ranges. More specifically, the plurality of filter portions 60 correspond one to one to the plurality of transmitting portions 61-64. Each of the plurality of filter portions 60 includes a corresponding transmitting portion and a part, overlapping with the corresponding transmitting portion, of the rotary plate 68. In the optical member 6, the plurality of filter portions 60 are arranged side by side along the circumference of a circle centered around the center axis of rotation A6 of the optical member 6. When viewed in a direction aligned with the center axis of rotation A6 of the optical member 6, the outer edge of the optical member 6 has a circular shape and the plurality of filter portions 60 have the shape of fans arranged around the center axis of rotation A6. Supposing the number of the filter portions 60 is N1, each of the plurality of filter portions 60 has a center angle of 360 degrees/N1 when viewed in the direction aligned with the center axis of rotation A6 of the optical member 6. Thus, if N1 =4, then each of the plurality of filter portions 60 has a center angle of 90 degrees when viewed in the direction aligned with the center axis of rotation A6 of the optical member 6. Each of the multiple wavelength ranges includes a wavelength of at least one of the second spontaneous emissions of light having the multiple wavelengths which have been produced by the second wavelength converting member 5. The wavelength is at least one of the multiple wavelengths. The second spontaneous emissions of light falling within the multiple wavelength ranges have mutually different wavelengths.

The plurality of transmitting portions 61-64 are arranged on the first principal surface 681 of the rotary plate 68. Each of the plurality of transmitting portions 61-64 is a multilayer film filter (dielectric multilayer film filter). In this optical member 6, the plurality of transmitting portions 61-64 are arranged side by side on the circumference of a circular centered around the center axis of rotation A6 of the optical member 6. The plurality of transmitting portions 61, 62, 63, and 64 are arranged in this order in a direction aligned with the rotational direction of the optical member 6, i.e., the rotational direction R1 (refer to FIG. 4A) of the rotary shaft 71 of the motor 7. When viewed in a direction aligned with the center axis of rotation A6, the plurality of transmitting portions 61-64 have the shape of fans arranged around the center axis of rotation A6. Supposing the number of the plurality of transmitting portions 61-64 is M1 (= N1), each of the plurality of transmitting portions 61-64 has a center angle of 360 degrees/M1 when viewed in the direction aligned with the center axis of rotation A6 of the optical member 6. Thus, if M1 =4, then each of the plurality of transmitting portions 61-64 has a center angle of 90 degrees when viewed in the direction aligned with the center axis of rotation A6 of the optical member 6.

In the following description, as for the multiple types of seed light rays P21-P24 emerging from the second wavelength converting member 5, the seed light ray P21 will be hereinafter referred to as a "first seed light ray P21," the seed light ray P22 will be hereinafter referred to as a "second seed light ray P22," the seed light ray P23 will be hereinafter referred to as a "third seed light ray P23," and the fourth seed light ray P24 will be hereinafter referred to as a "fourth seed light ray P24" for the sake of convenience of description. The wavelength of each of the first seed light ray P21, the second seed light ray P22, the third seed light ray P23, and the fourth seed light ray P24 is as long as the wavelength of a second spontaneous emission of light which is one of multiple different wavelengths of the second spontaneous emissions of light produced by the second wavelength converting member 5. The respective wavelengths of the first seed light ray P21, the second seed light ray P22, the third seed light ray P23, and the fourth seed light ray P24 are different from each other. If the wavelength-converting element is Pr³⁺, then the wavelengths of the first seed light ray P21, the second seed light ray P22, the third seed light ray P23, and the fourth seed light ray P24 may be, for example, 482 nm, 523 nm, 605 nm, and 637 nm, respectively. In the following description, the transmitting portion 61 will be hereinafter referred to as a "first transmitting portion 61," the transmitting portion 62 will be hereinafter referred to as a "second transmitting portion 62," the transmitting portion 63 will be hereinafter referred to as a "third transmitting portion 63," and the transmitting portion 64 will be hereinafter referred to as a "fourth transmitting portion 64" for the sake of convenience of description. Also, a wavelength range belonging to the multiple wavelength ranges which corresponds to the first transmitting portion 61 will be hereinafter referred to as a "first wavelength range," a wavelength range belonging to the multiple wavelength ranges which corresponds to the second transmitting portion 62 will be hereinafter referred to as a "second wavelength range," a wavelength range belonging to the multiple wavelength ranges which corresponds to the third transmitting portion 63 will be hereinafter referred to as a "third wavelength range," and a wavelength range belonging to the multiple wavelength ranges which corresponds to the fourth transmitting portion 64 will be hereinafter referred to as a "fourth wavelength range."

The first transmitting portion 61 selectively transmits a light ray falling within the first wavelength range. The first wavelength range includes the wavelength of the first seed light ray P21 but does not include the wavelength of the second seed light ray P22, the wavelength of the third seed light ray P23, or the wavelength of the fourth seed light ray P24. The first wavelength range may be, for example, equal to or longer than 440 nm and equal to or shorter than 490 nm. The second transmitting portion 62 selectively transmits a light ray falling within the second wavelength range. The second wavelength range includes the wavelength of the second seed light ray P22 but does not include the wavelength of the first seed light ray P21, the wavelength of the third seed light ray P23, or the wavelength of the fourth seed light ray P24. The second wavelength range may be, for example, equal to or longer than 510 nm and equal to or shorter than 550 nm. The third transmitting portion 63 selectively transmits a light ray falling within the third wavelength range. The third wavelength range includes the wavelength of the third seed light ray P23 but does not include the wavelength of the first seed light ray P21, the wavelength of the second seed light ray P22, or the wavelength of the fourth seed light ray P24. The third wavelength range may be, for example, equal to or longer than 570 nm and equal to or shorter than 610 nm. The fourth transmitting portion 64 selectively transmits a light ray falling within the fourth wavelength range. The fourth wavelength range includes the wavelength of the fourth seed light ray P24 but does not include the wavelength of the first seed light ray P21, the wavelength of the second seed light ray P22, or the wavelength of the third seed light ray P23. The fourth wavelength range may be, for example, equal to or longer than 620 nm and equal to or shorter than 650 nm. In the optical member 6, the transmitting portions 61-64 are designed such that the first, second, third, and fourth wavelength ranges do not overlap with each other. However, this is only an example and should not be construed as limiting. Alternatively, for example, the first and second wavelength ranges may partially overlap with each other, the second and third wavelength ranges may partially overlap with each other, and the third and fourth wavelength ranges may partially overlap with each other.

While the optical member 6 is rotating in the rotational direction R1, the multiple types of seed light rays P21-P24 are incident on the optical member 6. The optical member 6 lets the first seed light ray P21, the second seed light ray P22, the third seed light ray P23, and the fourth seed light ray P24 emerge therefrom time sequentially.

### (2.6) Motor

The motor 7 (refer to FIG. 1 and FIGS. 4A-4D) rotates the optical member 6. More specifically, the motor 7 rotates the optical member 6 around the center axis of rotation A6 of the optical member 6. The motor 7 may be, for example, a DC motor. The motor 7 is driven by the motor driver circuit 11 described above.

The motor 7 includes a motor body 70 and the rotary shaft 71 partially protruding from the motor body 70. In the motor 7, the rotary shaft 71 is coupled to the optical member 6. The rotational velocity of the rotary shaft 71 of the motor 7 is controlled by the control unit 8. More specifically, the rotational velocity of the rotary shaft 71 of the motor 7 is determined by having the motor driver circuit 11 controlled by the control unit 8 to drive the motor 7.

### (2.7) First driver circuit

The first driver circuit 9 (refer to FIG. 1) drives the first solid-state light source 2. The first driver circuit 9 may include, for example, a series circuit of a first resistor and a first switching element which are connected between a first power supply circuit and the first solid-state light source 2. The first driver circuit 9 lights the first solid-state light source 2 by supplying a drive current to the first solid-state light source 2. The first driver circuit 9 lights the first solid-state light source 2 by having the first switching element thereof turned ON by the control unit 8. The first driver circuit 9 extinguishes the first solid-state light source 2 by having the first switching element thereof turned OFF by the control unit 8. The first switching element may be, but does not have to be, a MOSFET. Alternatively, the first switching element may also be an FET other than the MOSFET or a bipolar transistor. In this embodiment, the first power supply circuit is counted out of the constituent elements of the light source system 1. However, this is only an example and should not be construed as limiting. Alternatively, the first power supply circuit may also be one of the constituent elements of the light source system 1.

### (2.8) Second driver circuit

The second driver circuit 10 (refer to FIG. 1) drives the second solid-state light source 4. The second driver circuit 10 may include, for example, a series circuit of a second resistor and a second switching element which are connected between a second power supply circuit and the second solid-state light source 4. The second driver circuit 10 lights the second solid-state light source 4 by supplying a drive current to the second solid-state light source 4. The second driver circuit 10 lights the second solid-state light source 4 by having the second switching element thereof turned ON by the control unit 8. The second driver circuit 10 extinguishes the second solid-state light source 4 by having the second switching element thereof turned OFF by the control unit 8. In the light source system 1, the second switching element is subjected to PWM control by the control unit 8. This allows the control unit 8 to perform PWM control on the second solid-state light source 4. The second switching element may be, but does not have to be, a MOSFET. Alternatively, the second switching element may also be an FET other than the MOSFET or a bipolar transistor. In this embodiment, the second power supply circuit is counted out of the constituent elements of the light source system 1. However, this is only an example and should not be construed as limiting. Alternatively, the second power supply circuit may also be one of the constituent elements of the light source system 1.

### (2.9) Motor driver circuit

The motor driver circuit 11 (refer to FIG. 1) drives the motor 7. More specifically, the motor driver circuit 11 is controlled by the control unit 8 to turn the rotary shaft 7 of the motor 7.

The motor driver circuit 11 is supplied with a supply voltage by a third power supply circuit, for example. In this embodiment, the third power supply circuit is counted out of the constituent elements of the light source system 1. However, this is only an example and should not be construed as limiting. Alternatively, the third power supply circuit may also be one of the constituent elements of the light source system 1.

### (2.10) Control unit

The control unit 8 (refer to FIG. 1) controls the first solid-state light source 2, the second solid-state light source 4, and the motor 7. The control unit 8 controls the first solid-state light source 2 by controlling the first driver circuit 9. More specifically, the control unit 8 controls the output of the first solid-state light source 2 by controlling the first driver circuit 9. The control unit 8 controls the second solid-state light source 4 by controlling the second driver circuit 10. More specifically, the control unit 8 controls the output of the second solid-state light source 4 by controlling the second driver circuit 10. The control unit 8 controls the motor 7 by controlling the motor driver circuit 11. More specifically, the control unit 8 controls the rotational velocity and other parameters of the motor 7 by controlling the motor driver circuit 11.

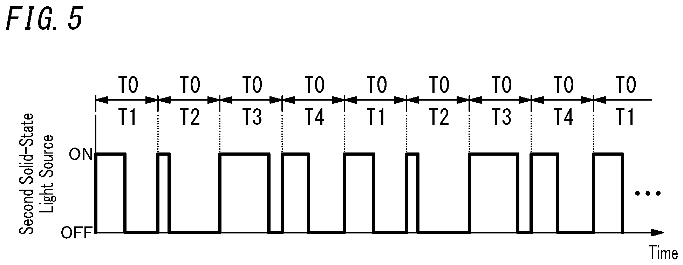

The control unit 8 performs PWM control on the second solid-state light source 4 to perform pulse flash drive on the second solid-state light source 4 in a regular cycle T0 as shown in FIG. 5, for example. More specifically, the control unit 8 performs the PWM control on the second solid-state light source 4 by performing PWM control on the second switching element of the second driver circuit 10 in a regular cycle T0. The control unit 8 controls the rotation of the optical member 6 to allow the light coming from the second wavelength converting member 5 to be incident on the first transmitting portion 61 in a first period T1 which is as long as the regular cycle T0, allow the light coming from the second wavelength converting member 5 to be incident on the second transmitting portion 62 in a second period T2 which is as long as the regular cycle T0, allow the light coming from the second wavelength converting member 5 to be incident on the third transmitting portion 63 in a third period T3 which is as long as the regular cycle T0, and allow the light coming from the second wavelength converting member 5 to be incident on the fourth transmitting portion 64 in a fourth period T1 which is as long as the regular cycle T0. In addition, the control unit 8 also controls the periods for which the second solid-state light source 4 is lighted (i.e., the ON period shown in FIG. 5) in the first, second, third, and fourth periods T1, T2, T3, T4 by performing the PWM control on the second solid-state light source 4. The control unit 8 controls the lighting periods of the second solid-state light source 4 by cyclically going through the series of the first, second, third, and fourth periods T1, T2, T3, T4 repeatedly. This allows the control unit 8 to adjust the respective intensities of the seed light rays P21-P24 incident on the first wavelength converting member 3. Consequently, the light source system 1 may control the intensity and colors of the light emerging from the light source system 1 (i.e., the light emerging from the first wavelength converting member 3) by making the control unit 8 control the second solid-state light source 4 and the optical member 6. The control unit 8 may control, in accordance with intensity/color control instruction information provided by, for example, either an input device that accepts an operating command entered by the user of the light source system 1 or an external controller, the respective periods (i.e., the ON periods shown in FIG. 5) for which the second solid-state light source 4 is lighted in the first, second, third, and fourth periods T1, T2, T3, T4. The frequency (1/T0) at which the control unit 8 performs the PWM control on the second solid-state light source 4 is preferably a frequency calculated by 200 Hz × M1 from the viewpoint of reducing flicker. Thus, if M1 = 4, then the frequency at which the control unit 8 performs the PWM control on the second solid-state light source 4 is preferably equal to or higher than 800 Hz.

The control unit 8 controls the rotation of the optical member 6 to make the timing when the rotating optical member 6 returns to the reference position of rotation synchronous with the beginning of the first period T1 of the PWM signal used to control the second solid-state light source 4. As used herein, the "reference position of rotation" refers to a position that has been determined in advance as a reference with respect to the rotational position of the optical member 6. For example, the reference position of rotation may be a position where the boundary between the fourth transmitting portion 64 and the first transmitting portion 61 agrees with the point of incidence of the light coming from the second wavelength converting member 5. The control unit 8 controls the motor 7 to make the time it takes for the optical member 6 to make one round as long as the total time of the first, second, third, and fourth periods T1, T2, T3, and T4.

The control unit 8 controls, in accordance with a detection signal supplied from a detection unit for detecting the rotational angle of the optical member 6 from the reference position of rotation, the motor driver circuit 11 to make the timing when the optical member 6 returns to the reference position of rotation synchronous with the beginning of the first period T1. The rotational angle of the optical member 6 from the reference position of rotation corresponds to the phase difference between the rotational position of the optical member 6 and the reference position of rotation. The detection unit may be implemented as, for example, a photo-interrupter or a Hall element and outputs a detection signal when the optical member 6 returns to the reference position of rotation.

The control unit 8 may include, for example, a computer system. The computer system may include a processor and a memory as principal hardware components thereof. The functions of the control unit 8 may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

### (3) Operation of light source system

The light source system 1 causes the first solid-state light source 2 to emit the first excitation light P1 and causes the second solid-state light source 4 to emit the second excitation light P2. Thus, the light source system 1 makes the first excitation light P1 incident on the first wavelength converting member 3 and also makes the second excitation light P2 incident on the second wavelength converting member 5. In this case, the control unit 8 performs the PWM control on the second solid-state light source 4. In addition, in the light source system 1, the control unit 8 rotates the optical member 6. This allows the light source system 1 to control the lighting period of the second solid-state light source 4 by cyclically going through the series of first, second, third, and fourth periods repeatedly. In this manner, the control unit 8 may control the respective intensities of the seed light rays P21-P24 incident on the first wavelength converting member 3. Consequently, the light source system 1 may control the intensity and color of the light emerging from the light source system 1 itself (i.e., the light emerging from the first wavelength converting member 3) by making the control unit 8 control the second solid-state light source 4 and the optical member 6. In the light source system 1, the light emerging from the first wavelength converting member 3 may include a stimulated emission of light P11 having the same wavelength as the first seed light ray P21, a stimulated emission of light P12 having the same wavelength as the second seed light ray P22, a stimulated emission of light P13 having the same wavelength as the third seed light ray P23, and a stimulated emission of light P14 having the same wavelength as the fourth seed light ray P24. In addition, the light emerging from the first wavelength converting member 3 may also include light having the same wavelength as the first excitation light P1 (i.e., part of the first excitation light P1) and light having the same wavelength as the second excitation light P2 (i.e., part of the second excitation light P2). The intensities of the stimulated emissions of light P11, P12, P13, P14 are greater than the intensities of the seed light rays P21, P22, P23, P24, respectively.

### (4) Recapitulation

A light source system 1 according to the first embodiment includes a first solid-state light source 2, a first wavelength converting member 3, a second solid-state light source 4, a second wavelength converting member 5, an optical member 6, a motor 7, and a control unit 8. The first solid-state light source 2 emits first excitation light P1. The first wavelength converting member 3 is an optical fiber containing a first wavelength-converting element. The first wavelength-converting element is excited by the first excitation light P1 to produce first spontaneous emissions of light having multiple wavelengths longer than a wavelength of the first excitation light P1. The first wavelength-converting element is also excitable by a first amplified spontaneous emission of light. The second solid-state light source 4 emits second excitation light P2. The second wavelength converting member 5 contains a second wavelength-converting element. The second wavelength-converting element is excited by the second excitation light P2 to produce second spontaneous emissions of light having multiple wavelengths longer than a wavelength of the second excitation light P2. The second wavelength-converting element is also excitable by a second amplified spontaneous emission of light. The optical member 6 is interposed between the second wavelength converting member 5 and the first wavelength converting member 3. The optical member 6 includes a plurality of filter portions 60 provided for light rays falling within multiple wavelength ranges, respectively. Each of the plurality of filter portions 60 transmits a light ray falling within a corresponding one of the multiple wavelength ranges. The motor 7 rotates the optical member 6. The control unit 8 controls the motor 7 and the second solid-state light source 4. In the optical member 6, the plurality of filter portions 60 are arranged side by side along a circumference of a circle. The circle is centered around a center axis of rotation A6 of the optical member 6. Each of the multiple wavelength ranges includes a wavelength of at least one of the second spontaneous emissions of light having the multiple wavelengths which have been produced by the second wavelength converting member 5. The wavelength is at least one of the multiple wavelengths.

The light source system 1 according to the first embodiment may control the intensity and color of the emerging light even without using solid-state light sources that emit seed light rays.

In addition, in the light source system 1 according to the first embodiment, the first wavelength converting member 3 contains Pr³⁺ as the first wavelength-converting element and the second wavelength converting member 5 contains Pr³⁺ as the second wavelength-converting element. Thus, the light source system 1 may increase the intensities of the green stimulated emission of light and red stimulated emission of light emerging from the first wavelength converting member 3. This allows the light source system 1 according to the first embodiment to improve the color rendering performance of the light emerging from the first wavelength converting member 3.

### (Second embodiment)

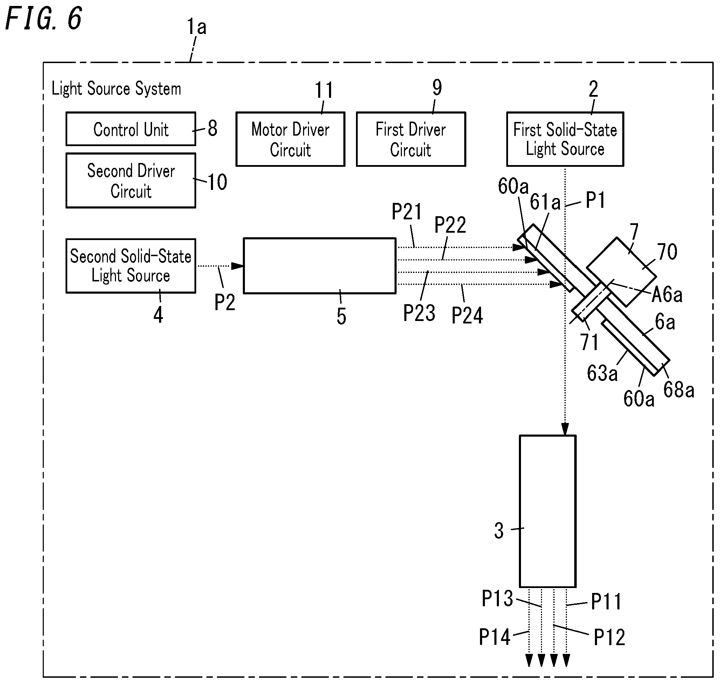

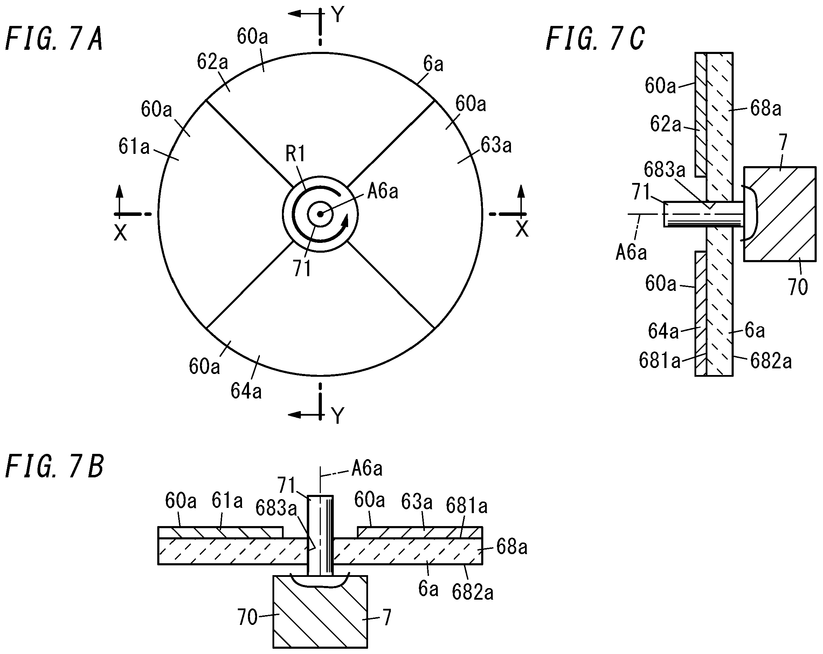

A light source system 1a according to a second embodiment will now be described with reference to FIGS. 6, 7A, 7B, and 7C. In the following description, any constituent element of the light source system 1a according to this second embodiment, having the same function as a counterpart of the light source system 1 according to the first embodiment described above, will be designated by the same reference numeral as that counterpart's, and description thereof will be omitted herein.

The light source system 1a according to the second embodiment includes an optical member 6a instead of the optical member 6 of the light source system 1 according to the first embodiment, which is a difference from the light source system 1 according to the first embodiment.

The light source system 1a does not include the optical element 12 of the light source system 1. In the light source system 1a, the first solid-state light source 2, the optical member 6a, and the first wavelength converting member 3 are arranged in straight line. The optical member 6a is interposed between the first solid-state light source 2 and the first wavelength converting member 3.

In addition, the optical member 6a is interposed between the second wavelength converting member 5 and the first wavelength converting member 3 as well. In this case, the direction in which the light emerging portion 52 of the second wavelength converting member 5 and the optical member 6a are arranged side by side is perpendicular to the direction in which the light incident portion 31 of the first wavelength converting member 3 and the optical member 6a are arranged side by side.

As shown in FIGS. 7A-7C, the optical member 6a includes a rotary plate 68a and a plurality of (e.g., four) filter portions 60a provided for light rays falling within multiple different wavelength ranges.

The rotary plate 68a may rotate around the center axis of rotation A6a of the optical member 6a. The center axis of rotation A6a intersects with the direction in which the first solid-state light source 2 and the light incident portion 31 of the first wavelength converting member 3 are arranged side by side. In this case, the smaller angle of intersection out of the two angles of intersection may be, for example, 45 degrees. This angle of intersection does not have to be exactly equal to 45 degrees but may also fall within the range equal to or greater than 42 degrees and equal to or less than 48 degrees, for example.

When viewed in the thickness direction defined for the rotary plate 68a, the rotary plate 68a has a circular outer edge. The rotary plate 68a has a first principal surface 681a facing the second wavelength converting member 5 in the thickness direction defined for the rotary plate 68a and a second principal surface 682a opposite from the first principal surface 681a. The rotary plate 68a may be coupled to, for example, the rotary shaft 71 of the motor 7 and rotates along with the rotary shaft 71 of the motor 7. In the optical member 6a, part of the rotary shaft 71 of the motor 7 is located inside a center through hole 683a of the rotary plate 68a. The rotary plate 68a is arranged such that the thickness direction defined for the rotary plate 68a is aligned with the center axis of rotation A6a. The optical member 6a is arranged such that the point of incidence of the light emerging from the second wavelength converting member 5 on the optical member 6a is distant from the center axis of rotation A6a in a direction perpendicular to the center axis of rotation A6a of the optical member 6a. The distance from the center axis of rotation A6a to the point of incidence is longer than the shortest distance from the center axis of rotation A6a to the filter portions 60a and shorter than the longest distance from the center axis of rotation A6a to the outer edge of the filter portions 60a. The rotary plate 68a has a light transmitting property and transmits visible light. Thus, the rotary plate 68a transmits the first excitation light P1 emitted from the first solid-state light source 2. The rotary plate 68a may be, but does not have to be, a glass substrate. Alternatively, the rotary plate 68 may also be a ceramic substrate or a resin substrate.

The optical member 6a reflects the multiple types of seed light rays P21-P24 emerging from the second wavelength converting member 5.

The plurality of filter portions 60a respectively include reflective portions 61a-64a that reflect light rays falling within multiple wavelength ranges. More specifically, the plurality of filter portions 60a correspond one to one to the plurality of reflective portions 61a-64a. In the optical member 6a, the plurality of filter portions 60a are arranged side by side along the circumference of a circle centered around the center axis of rotation A6a of the optical member 6a. When viewed in a direction aligned with the center axis of rotation A6a of the optical member 6a, the outer edge of the optical member 6a has a circular shape and the plurality of filter portions 60a have the shape of fans arranged around the center axis of rotation A6a. Supposing the number of the filter portions 60a is N2, each of the plurality of filter portions 60a has a center angle of 360 degrees/N2 when viewed in the direction aligned with the center axis of rotation A6a of the optical member 6a. Thus, if N2 =4, then each of the plurality of filter portions 60a has a center angle of 90 degrees when viewed in the direction aligned with the center axis of rotation A6a of the optical member 6a. Each of the multiple wavelength ranges includes a wavelength of at least one of the second spontaneous emissions of light having the multiple wavelengths which have been produced by the second wavelength converting member 5. The wavelength is at least one of the multiple wavelengths.

The plurality of reflective portions 61a-64a are arranged on the first principal surface 681a of the rotary plate 68a. Each of the plurality of reflective portions 61a-64a is a multilayer film mirror. In this optical member 6a, the plurality of reflective portions 61a-64a are arranged side by side on the circumference of a circular centered around the center axis of rotation A6a of the optical member 6a. The plurality of reflective portions 61a, 62a, 63a, and 64a are arranged in this order in a direction aligned with the rotational direction of the optical member 6a, i.e., the rotational direction R1 (refer to FIG. 7A) of the rotary shaft 71 of the motor 7. When viewed in a direction aligned with the center axis of rotation A6a, the plurality of reflective portions 61a-64a have the shape of fans arranged around the center axis of rotation A6a. Supposing the number of the plurality of reflective portions 61a-64a is M2 (= N2), each of the plurality of reflective portions 61a-64a has a center angle of 360 degrees/M2 when viewed in the direction aligned with the center axis of rotation A6a of the optical member 6a. Thus, if M2 =4, then each of the plurality of reflective portions 61a-64a has a center angle of 90 degrees when viewed in the direction aligned with the center axis of rotation A6a of the optical member 6a.

In the following description, the reflective portion 61a will be hereinafter referred to as a "first reflective portion 61a," the reflective portion 62a will be hereinafter referred to as a "second reflective portion 62a," the reflective portion 63a will be hereinafter referred to as a "third reflective portion 63a," and the reflective portion 64a will be hereinafter referred to as a "fourth reflective portion 64a" for the sake of convenience of description. Also, a wavelength range belonging to the multiple wavelength ranges which corresponds to the first reflective portion 61a will be hereinafter referred to as a "first wavelength range," a wavelength range belonging to the multiple wavelength ranges which corresponds to the second reflective portion 62a will be hereinafter referred to as a "second wavelength range," a wavelength range belonging to the multiple wavelength ranges which corresponds to the third reflective portion 63a will be hereinafter referred to as a "third wavelength range," and a wavelength range belonging to the multiple wavelength ranges which corresponds to the fourth reflective portion 64a will be hereinafter referred to as a "fourth wavelength range."

The first reflective portion 61a selectively reflects a light ray falling within the first wavelength range. The first wavelength range includes the wavelength of the first seed light ray P21 but does not include the wavelength of the second seed light ray P22, the wavelength of the third seed light ray P23, or the wavelength of the fourth seed light ray P24. The second reflective portion 62a selectively reflects a light ray falling within the second wavelength range. The second wavelength range includes the wavelength of the second seed light ray P22 but does not include the wavelength of the first seed light ray P21, the wavelength of the third seed light ray P23, or the wavelength of the fourth seed light ray P24. The third reflective portion 63a selectively reflects a light ray falling within the third wavelength range. The third wavelength range includes the wavelength of the third seed light ray P23 but does not include the wavelength of the first seed light ray P21, the wavelength of the second seed light ray P22, or the wavelength of the fourth seed light ray P24. The fourth reflective portion 64a selectively reflects a light ray falling within the fourth wavelength range. The fourth wavelength range includes the wavelength of the fourth seed light ray P24 but does not include the wavelength of the first seed light ray P21, the wavelength of the second seed light ray P22, or the wavelength of the third seed light ray P23. In the optical member 6a, the reflective portions 61a-64a are designed such that the first, second, third, and fourth wavelength ranges do not overlap with each other. However, this is only an example and should not be construed as limiting. Alternatively, for example, the first and second wavelength ranges may partially overlap with each other, the second and third wavelength ranges may partially overlap with each other, and the third and fourth wavelength ranges may partially overlap with each other.

While the optical member 6a is rotating in the rotational direction R1, the multiple types of seed light rays P21-P24 are incident on the optical member 6a. The optical member 6a lets the first seed light ray P21, the second seed light ray P22, the third seed light ray P23, and the fourth seed light ray P24 emerge therefrom time sequentially. The first reflective portion 61a transmits a light ray with the wavelength of the first excitation light P1. Thus, the first excitation light P1 incident on the second principal surface 682a of the rotary plate 68a of the optical member 6a is caused to be incident on the first wavelength converting member 3 in the same first period T1 (refer to FIG. 5) as the first seed light ray P21. Note that the second reflective portion 62a, the third reflective portion 63a, and the fourth reflective portion 64a transmit the light ray with the wavelength of the first excitation light P1.

A light source system 1a according to the second embodiment includes a first solid-state light source 2, a first wavelength converting member 3, a second solid-state light source 4, a second wavelength converting member 5, an optical member 6a, a motor 7, and a control unit 8. The first solid-state light source 2 emits first excitation light P1. The first wavelength converting member 3 is an optical fiber containing a first wavelength-converting element. The first wavelength-converting element is excited by the first excitation light P1 to produce first spontaneous emissions of light having multiple wavelengths longer than a wavelength of the first excitation light P1. The first wavelength-converting element is also excitable by a first amplified spontaneous emission of light. The second solid-state light source 4 emits second excitation light P2. The second wavelength converting member 5 contains a second wavelength-converting element. The second wavelength-converting element is excited by the second excitation light P2 to produce second spontaneous emissions of light having multiple wavelengths longer than a wavelength of the second excitation light P2. The second wavelength-converting element is also excitable by a second amplified spontaneous emission of light. The optical member 6a is interposed between the second wavelength converting member 5 and the first wavelength converting member 3. The optical member 6 includes a plurality of filter portions 60a provided for light rays falling within multiple wavelength ranges, respectively. Each of the plurality of filter portions 60a reflects a light ray falling within a corresponding one of the multiple wavelength ranges. The motor 7 rotates the optical member 6a. The control unit 8 controls the motor 7 and the second solid-state light source 4. In the optical member 6a, the plurality of filter portions 60a are arranged side by side along a circumference of a circle. The circle is centered around a center axis of rotation A6a of the optical member 6a. Each of the multiple wavelength ranges includes a wavelength of at least one of the second spontaneous emissions of light having the multiple wavelengths which have been produced by the second wavelength converting member 5. The wavelength is at least one of the multiple wavelengths.

The light source system 1a according to the second embodiment may control the intensity and color of the emerging light even without using solid-state light sources that emit seed light rays.

### (Variations)

Note that the first and second embodiments described above are only exemplary ones of various embodiments of the present disclosure and should not be construed as limiting. Rather, the first and second exemplary embodiments may be readily modified in various manners depending on a design choice or any other factor without departing from the scope of the claims.

For example, in the light source system 1, 1a, the control unit 8 does not have to be configured to control the first solid-state light source 2, the second solid-state light source 4, and the motor 7. According to the claimed invention, the control unit 8 is configured to control the second solid-state light source 4 and the motor 7. In that case, the light source system 1, 1a which includes a first control unit 8 serving as the control unit 8 may also include a second control unit for controlling the first solid-state light source 2.

Also, the laser light source included in the first solid-state light source 2 does not have to be a semiconductor laser diode for emitting a blue laser beam but may also be, for example, a semiconductor laser diode for emitting a violet laser beam. Furthermore, the first solid-state light source 2 does not have to be a semiconductor laser diode but may include a light-emitting diode (LED) light source and an optical system.

Likewise, the laser light source included in the second solid-state light source 4 does not have to be a semiconductor laser diode for emitting a blue laser beam but may also be, for example, a semiconductor laser diode for emitting a violet laser beam. Furthermore, the second solid-state light source 4 does not have to be a semiconductor laser diode but may include an LED light source and an optical system.

Furthermore, the wavelength of the second excitation light P2 does not have to be as long as, but may also be different from, the wavelength of the first excitation light P1.

Furthermore, the second wavelength converting member 5 does not have to be an optical fiber but may also be an optical rod. The optical rod includes a core and cladding similar to those of the optical fiber. The optical rod has a larger diameter than the core of the optical fiber. The optical rod has no flexibility. While the optical fiber has the shape of a fiber with flexibility, the optical rod has the shape of a rod with no flexibility.

Optionally, in the light source system 1, 1a, the first wavelength converting member 3 may contain multiple types of first wavelength-converting elements as the first wavelength-converting element and the second wavelength-converting element may contain multiple types of second wavelength-converting elements as the second wavelength-converting element. This allows the light source system 1, 1a to excite the first wavelength-converting element with the second amplified spontaneous emission of light produced from the second wavelength-converting element to cause the first wavelength-converting element to produce a first amplified spontaneous emission of light having a different wavelength from the second amplified spontaneous emission of light produced from the second wavelength-converting element. More specifically, if the first wavelength converting member 3 includes Pr³⁺ and Tb³⁺, for example, as the first wavelength-converting elements, the second wavelength converting member 5 may contain Pr³⁺ and Tb³⁺, for example, as the second wavelength-converting elements or contain Pr³⁺ and Dy³⁺, for example, as the second wavelength-converting elements.

Furthermore, in the light source system 1, if the first excitation light P1 is a blue ray as described above, then the optical member 6 may have no first transmitting portion 61 for transmitting a light ray falling within the first wavelength range. In that case, the second transmitting portion 62, the third transmitting portion 63, and the fourth transmitting portion 64, each having the shape of a fan when viewed in the direction aligned with the center axis of rotation A6, may each have a center angle of 120 degrees. In that case, the second transmitting portion 62, the third transmitting portion 63, and the fourth transmitting portion 64 of the optical member 6 are subjected to optical design not to transmit the second excitation light P2, for example.

Furthermore, the first transmitting portion 61, the second transmitting portion 62, the third transmitting portion 63, and the fourth transmitting portion 64 do not have to be arranged in the above-described order in the rotational direction R1 (refer to FIG. 4A) of the rotary shaft 71 of the motor 7. Alternatively, for example, the first transmitting portion 61, the third transmitting portion 63, the second transmitting portion 62, and the fourth transmitting portion 64 may be arranged in this order.

Furthermore, in the light source system 1, if the second excitation light P2 is a blue light ray as described above, the four filter portions 60 may each have a center angle of 72 degrees and the fan-shaped region, transmitting the second excitation light P2, of the rotary plate 68 may have a center angle of 72 degrees.

Furthermore, in a variation of the light source system 1, the first solid-state light source 2, the optical element 12, and the light incident portion 31 of the first wavelength converting member 3 may be arranged in straight line and the optical element 12 may be configured to transmit the first excitation light P1 and reflect the seed light rays P21-P24.

Alternatively, the optical member 6 may also have a configuration in which the rotary plate 68 has the shape of a circle, of which the radius is shorter than the distance from the center axis of rotation A6 to the point of incidence and in which the first transmitting portion 61, the second transmitting portion 62, the third transmitting portion 63, and the fourth transmitting portion 64 are arranged along a side edge of the rotary plate 68.

Furthermore, the optical element 12 does not have to be a dichroic mirror but may also be a prism, for example.

Furthermore, the first reflective portion 61a, the second reflective portion 62a, the third reflective portion 63a, and the fourth reflective portion 64a do not have to be arranged in the above-described order in the rotational direction R1 (refer to FIG. 7A) of the rotary shaft 71 of the motor 7. Alternatively, for example, the first reflective portion 61a, the third reflective portion 63a, the second reflective portion 62a, and the fourth reflective portion 64a may be arranged in this order.

The control unit 8 does not have to perform PWM control on the second solid-state light source 4 but may control the second solid-state light source 4 by any other control method.

### (Claimed invention and optional implementations)

A light source system 1, 1a according to the claimed invention is defined in claim 1.

The light source system 1, 1a according to the claimed invention may control the intensity and color of the emitted light even without using solid-state light sources that emit seed light rays.

A light source system 1, 1a according to a first optional implementation, is defined in claim 2.

The light source system 1, 1a according to the first optional implementation makes it easier to optically couple the light emerging from the second wavelength converting member 5 to the first wavelength converting member 3 by setting the core diameter of the optical fiber serving as the second wavelength converting member 5 and the core diameter of the optical fiber serving as the first wavelength converting member 3 at the same value.

A light source system 1, 1a according to a second optional implementation, is defined in claim 3.

The light source system 1, 1a according to the second optional implementation allows a plurality of light rays having the same wavelengths as multiple types of second spontaneous emissions of light produced by the second wavelength-converting element to be used as seed light rays P21-P24 to be incident on the first wavelength converting member 3.

A light source system 1 according to a third optional implementation, is defined in claim 4.

A alight source system 1a according to a fourth optional implementation, is defined in claim 5.

A light source system 1 according to a fifth optional implementation, is defined in claim 6.

The light source system 1 according to the fifth optional implementation allows a light emerging portion 52 of the second wavelength converting member 5, the optical member 6, and a light incident portion 31 of the first wavelength converting member 3 to be arranged in a straight line, thus making it easier to optically couple the light emerging from the second wavelength converting member 5 to the first wavelength converting member 3.

A light source system 1, 1a according to a sixth optional implementation, is defined in claim 7.

The light source system 1, 1a according to the sixth optional implementation allows the light ray emerging from the second wavelength converting member 5 which has a wavelength falling within the wavelength range equal to or longer than 510 nm and equal to or shorter than 550 nm and the light ray emerging from the second wavelength converting member 5 which has a wavelength falling within the wavelength range equal to or longer than 620 nm and equal to or shorter than 650 nm to be incident on the first wavelength converting member 3.

A light source system 1, 1a according to a seventh optional implementation, is defined in claim 8.

The light source system 1, 1a according to the seventh optional implementation may increase the intensity of the second excitation light P2.

A light source system 1, 1a according to an eighth optional implementation, is defined in claim 9.

The light source system 1, 1a according to the eighth optional implementation may control the intensity and color of the light emerging from the first wavelength converting member 3 by performing PWM control on the second solid-state light source 4.

A light source system 1, 1a according to a ninth optional implementation, is defined in claim 10.

The light source system 1, 1a according to the ninth optional implementation may reduce a flicker.

A light source system 1, 1a according to a tenth optional implementation, is defined in claim 11.

### Reference Signs List

- 1, 1a: Light Source System
- 2: First Solid-State Light Source
- 3: First Wavelength Converting Member
- 31: Light Incident Portion
- 4: Second Solid-State Light Source
- 5: Second Wavelength Converting Member
- 52: Light Emerging Portion
- 6, 6a: Optical Member
- 60, 60a: Filter Portion
- 61-64: Transmitting Portion
- 61a-64a: Reflective Portion
- 7: Motor
- 8: Control Unit
- 12: Optical Element
- A6, A6a: Center Axis of Rotation
- P1: First Excitation Light
- P2: Second Excitation Light

## Claims

1. A light source system (1,1a) comprising
a first solid-state light source (2) configured to emit first excitation light (P1);
a first wavelength converting member (3) implemented as an optical fiber containing a first wavelength-converting element, the first wavelength-converting element being excited by the first excitation light to produce first spontaneous emissions of light having multiple wavelengths longer than a wavelength of the first excitation light, the first wavelength-converting element being excitable by a first amplified spontaneous emission of light; and
a second solid-state light source (4), **characterised in that** the second solid-state light source is configured to emit second excitation light (P2); and **characterised in that** the light source system further comprises:
a second wavelength converting member (5) containing a second wavelength-converting element, the second wavelength-converting element being excited by the second excitation light to produce second spontaneous emissions of light having multiple wavelengths longer than a wavelength of the second excitation light, the second wavelength-converting element being excitable by a second amplified spontaneous emission of light;
an optical member (6, 6a) interposed between the second wavelength converting member and the first wavelength converting member and including a plurality of filter portions (60, 60a) provided for light rays falling within multiple wavelength ranges, respectively;
a motor (7) configured to rotate the optical member; and
a control unit (8) configured to control the motor and the second solid-state light source,
the optical member having the plurality of filter portions arranged side by side along a circumference of a circle, the circle being centered around a center axis of rotation (A6, A6a) of the optical member, and
each of the multiple wavelength ranges including a wavelength of at least one of the second spontaneous emissions of light having the multiple wavelengths which have been produced by the second wavelength converting member, the wavelength being at least one of the multiple wavelengths.

2. The light source system of claim 1, wherein
the second wavelength converting member is an optical fiber.

3. The light source system of claim 1 or 2, wherein
the second wavelength-converting element is an identical type of element to the first wavelength-converting element.

4. The light source system of any one of claims 1 to 3, wherein
the plurality of filter portions (60) includes a plurality of transmitting portions (61-64) arranged side by side along the circumference of the circle centered around the center axis of rotation and configured to transmit light rays falling within mutually different wavelength ranges.

5. The light source system of any one of claims 1 to 3, wherein
the plurality of filter portions (60a) includes a plurality of reflective portions (61a-64a) arranged side by side along the circumference of the circle centered around the center axis of rotation and configured to reflect light rays falling within mutually different wavelength ranges.

6. The light source system of claim 4, further comprising an optical element (12) interposed between the optical member and the first wavelength converting member and configured to transmit light coming from the optical member toward the first wavelength converting member and reflect the first excitation light emitted from the first solid-state light source toward the first wavelength converting member.

7. The light source system of any one of claims 4 to 6, wherein
the multiple wavelength ranges include:
a wavelength range equal to or longer than 510 nm and equal to or shorter than 550 nm; and
a wavelength range equal to or longer than 620 nm and equal to or shorter than 650 nm.

8. The light source system of any one of claims 1 to 7, wherein
the second solid-state light source includes a laser light source.

9. The light source system of any one of claims 1 to 8, wherein
the control unit is configured to perform PWM control on the second solid-state light source.

10. The light source system of any one of claims 4 to 7, wherein
the control unit is configured to perform PWM control on the second solid-state light source,
the multiple wavelength ranges are four wavelength ranges, and
a frequency at which the control unit performs the PWM control on the second solid-state light source is equal to or higher than 800 Hz.

11. The light source system of any one of claims 1 to 10, wherein
each of the first wavelength-converting element and the second wavelength-converting element includes an element selected from the group consisting of Pr, Tb, Ho, Dy, Er, Eu, Nd, and Mn.

## Patentansprüche

1. Lichtquellensystem (1, 1a), umfassend:
eine erste Festkörperlichtquelle (2), die konfiguriert ist, erstes Anregungslicht (P1) zu emittieren;
ein erstes Wellenlängenumwandlungsglied (3), das als eine optische Faser implementiert ist, die ein erstes Wellenlängenumwandlungselement enthält, wobei das erste Wellenlängenumwandlungselement durch das erste Anregungslicht angeregt wird, um erste spontane Lichtemissionen mit mehreren Wellenlängen zu erzeugen, die länger sind als eine Wellenlänge des ersten Anregungslichts, und wobei das erste Wellenlängenumwandlungselement durch eine erste verstärkte spontane Lichtemission anregbar ist; und
eine zweite Festkörperlichtquelle (4),
**dadurch gekennzeichnet, dass** die zweite Festkörperlichtquelle konfiguriert ist, zweites Anregungslicht (P2) zu emittieren; und
**dadurch gekennzeichnet, dass** das Lichtquellensystem ferner umfasst:
ein zweites Wellenlängenumwandlungsglied (5), das ein zweites Wellenlängenumwandlungselement enthält, wobei das zweite Wellenlängenumwandlungselement durch das zweite Anregungslicht angeregt wird, um zweite spontane Lichtemissionen mit mehreren Wellenlängen zu erzeugen, die länger sind als eine Wellenlänge des zweiten Anregungslichts, und wobei das zweite Wellenlängenumwandlungselement durch eine zweite verstärkte spontane Lichtemission anregbar ist;
ein optisches Glied (6, 6a), das zwischen dem zweiten Wellenlängenumwandlungsglied und dem ersten Wellenlängenumwandlungsglied angeordnet ist und eine Mehrzahl von Filterabschnitten (60, 60a) beinhaltet, die für Lichtstrahlen bereitgestellt sind, die jeweils in mehrere Wellenlängenbereiche fallen;
einen Motor (7), der konfiguriert ist, das optische Glied zu drehen; und
eine Steuer- bzw. Regeleinheit (8), die konfiguriert ist, den Motor und die zweite Festkörperlichtquelle zu steuern bzw. zu regeln,
wobei das optische Glied die Mehrzahl von Filterabschnitten aufweist, die Seite an Seite entlang eines Umfangs eines Kreises angeordnet sind, wobei der Kreis um eine Drehmittelachse (A6, A6a) des optischen Glieds zentriert ist, und
jeder der mehreren Wellenlängenbereiche eine Wellenlänge von zumindest einer der zweiten spontanen Lichtemissionen mit den mehreren Wellenlängen beinhaltet, die durch das zweite Wellenlängenumwandlungsglied erzeugt wurden, wobei die Wellenlänge zumindest eine der mehreren Wellenlängen ist.

2. Lichtquellensystem nach Anspruch 1, wobei
das zweite Wellenlängenumwandlungsglied eine optische Faser ist.

3. Lichtquellensystem nach Anspruch 1 oder 2, wobei
das zweite Wellenlängenumwandlungselement von einem identischen Elementtyp wie das erste Wellenlängenumwandlungselement ist.

4. Lichtquellensystem nach einem der Ansprüche 1 bis 3, wobei
die Mehrzahl von Filterabschnitten (60) eine Mehrzahl von Übertragungsabschnitten (61-64) beinhaltet, die Seite an Seite entlang des Umfangs des Kreises angeordnet sind, der um die Drehmittelachse zentriert ist, und konfiguriert sind, Lichtstrahlen zu übertragen, die in voneinander unterschiedlichen Wellenlängenbereichen liegen.

5. Lichtquellensystem nach einem der Ansprüche 1 bis 3, wobei
die Mehrzahl von Filterabschnitten (60A) eine Mehrzahl von Reflexionsabschnitten (61a-64a) beinhaltet, die Seite an Seite entlang des Umfangs des Kreises angeordnet sind, der um die Drehmittelachse zentriert ist, und konfiguriert sind, Lichtstrahlen zu reflektieren, die in voneinander unterschiedlichen Wellenlängenbereichen liegen.

6. Lichtquellensystem nach Anspruch 4, ferner umfassend ein optisches Element (12), das zwischen dem optischen Glied und dem ersten Wellenlängenumwandlungsglied angeordnet und konfiguriert ist, Licht, das von dem optischen Glied kommt, in Richtung des ersten Wellenlängenumwandlungsglieds zu übertragen und das erste Anregungslicht, das von der ersten Festkörperlichtquelle emittiert wird, in Richtung des ersten Wellenlängenumwandlungsglieds zu reflektieren.

7. Lichtquellensystem nach einem der Ansprüche 4 bis 6, wobei
die mehreren Wellenlängenbereiche beinhalten:
einen Wellenlängenbereich, der gleich oder länger als 510 nm und gleich oder kürzer als 550 nm ist; und
einen Wellenlängenbereich, der gleich oder länger als 620 nm und gleich oder kürzer als 650 nm ist.

8. Lichtquellensystem nach einem der Ansprüche 1 bis 7, wobei
die zweite Festkörperlichtquelle eine Laserlichtquelle beinhaltet.

9. Lichtquellensystem nach einem der Ansprüche 1 bis 8, wobei
die Steuer- bzw. Regeleinheit konfiguriert ist, eine PWM-Steuerung bzw. - Regelung der zweiten Festkörperlichtquelle durchzuführen.

10. Lichtquellensystem nach einem der Ansprüche 4 bis 7, wobei
die Steuer- bzw. Regeleinheit konfiguriert ist, eine PWM-Steuerung bzw. - Regelung der zweiten Festkörperlichtquelle durchzuführen,
die mehreren Wellenlängenbereiche vier Wellenlängenbereiche sind, und
eine Frequenz, mit der die Steuer- bzw. Regeleinheit die PWM-Steuerung bzw. -Regelung der zweiten Festkörperlichtquelle durchführt, gleich oder höher als 800 Hz ist.

11. Lichtquellensystem nach einem der Ansprüche 1 bis 10, wobei jedes des ersten Wellenlängenumwandlungselements und des zweiten Wellenlängenumwandlungselements ein Element beinhaltet, das aus der Gruppe bestehend aus Pr, Tb, Ho, Dy, Er, Eu, Nd und Mn ausgewählt ist.

## Revendications

1. Système de source lumineuse (1, 1a) comprenant :
une première source lumineuse à l'état solide (2) configurée pour émettre de la première lumière d'excitation (P1) ;
un premier membre de conversion de longueur d'onde (3) mis en œuvre en tant que fibre optique contenant un premier élément de conversion de longueur d'onde, le premier élément de conversion de longueur d'onde étant excité par la première lumière d'excitation pour produire des premières émissions spontanées de lumière ayant de multiples longueurs d'onde plus longues qu'une longueur d'onde de la première lumière d'excitation, le premier élément de conversion de longueur d'onde pouvant être excité par une première émission spontanée amplifiée de lumière ; et
une seconde source lumineuse à l'état solide (4), **caractérisé en ce que** la seconde source lumineuse à l'état solide est configurée pour émettre de la seconde lumière d'excitation (P2) ; et
**caractérisé en ce que** le système de source lumineuse comprend en outre :
un second membre de conversion de longueur d'onde (5) contenant un second élément de conversion de longueur d'onde, le second élément de conversion de longueur d'onde étant excité par la second lumière d'excitation pour produire des secondes émissions spontanées de lumière ayant de multiples longueurs d'onde plus longues qu'une longueur d'onde de la seconde lumière d'excitation, le second élément de conversion de longueur d'onde pouvant être excité par une seconde émission spontanée amplifiée de lumière ;
un membre optique (6, 6a) interposé entre le second membre de conversion de longueur d'onde et le premier membre de conversion de longueur d'onde, et incluant une pluralité de portions de filtre (60, 60a) prévues pour des rayons lumineux tombant au sein de multiples plages de longueur d'onde, respectivement ;
un moteur (7) configuré pour faire tourner le membre optique ; et
un module de commande (8) configuré pour commander le moteur et la seconde source lumineuse à l'état solide,
le membre optique ayant la pluralité de portions de filtre agencées côte à côte le long d'une circonférence d'un cercle, le cercle étant centré autour d'un axe central de rotation (A6, A6a) de l'élément optique, et
chacune des multiples plages de longueur d'onde incluant une longueur d'onde d'au moins une des secondes émissions spontanées de lumière ayant les multiples longueurs d'onde qui ont été produites par le second membre de conversion de longueur d'onde, la longueur d'onde étant au moins une des multiples longueurs d'onde.

2. Système de source lumineuse selon la revendication 1, dans lequel
le second membre de conversion de longueur d'onde est une fibre optique.

3. Système de source lumineuse selon la revendication 1 ou 2, dans lequel
le second élément de conversion de longueur d'onde est un type identique d'élément au premier élément de conversion de longueur d'onde.

4. Système de source lumineuse selon l'une quelconque des revendications 1 à 3, dans lequel
la pluralité de portions de filtre (60) inclut une pluralité de portions de transmission (61 à 64) agencées côte à côte le long de la circonférence du cercle centré autour de l'axe central de rotation et configurées pour transmettre des rayons lumineux tombant au sein de plages de longueur d'onde mutuellement différentes.

5. Système de source lumineuse selon l'une quelconque des revendications 1 à 3, dans lequel
la pluralité de portions de filtre (60a) inclut une pluralité de portions réfléchissantes (61a à 64a) agencées côte à côte le long de la circonférence du cercle centré autour de l'axe central de rotation et configurées pour refléter des rayons lumineux tombant au sein de plages de longueur d'onde mutuellement différentes.

6. Système de source lumineuse selon la revendication 4, comprenant en outre un élément optique (12) interposé entre le membre optique et le premier membre de conversion de longueur d'onde, et configuré pour transmettre de la lumière provenant du membre optique vers le premier membre de conversion de longueur d'onde et refléter la première lumière d'excitation émise à partir de la première source lumineuse à l'état solide vers le premier membre de conversion de longueur d'onde.

7. Système de source lumineuse selon l'une quelconque des revendications 4 à 6, dans lequel
les multiples plages de longueur d'onde incluent :
une plage de longueur d'onde égale à ou plus longue que 510 nm et égale à ou plus courte que 550 nm ; et
une plage de longueur d'onde égale à ou plus longue que 620 nm et égale à ou plus courte que 650 nm.

8. Système de source lumineuse selon l'une quelconque des revendications 1 à 7, dans lequel
la seconde source lumineuse à l'état solide inclut une source de lumière laser.

9. Système de source lumineuse selon l'une quelconque des revendications 1 à 8, dans lequel
le module de commande est configuré pour réaliser une commande de modulation d'impulsions en durée sur la seconde source lumineuse à l'état solide.

10. Système de source lumineuse selon l'une quelconque des revendications 4 à 7, dans lequel
le module de commande est configuré pour réaliser une commande de modulation d'impulsions en durée sur la seconde source lumineuse à l'état solide,
les multiples plages de longueur d'onde sont quatre plages de longueur d'onde, et
une fréquence à laquelle le module de commande réalise la commande de modulation d'impulsions en durée sur la seconde source lumineuse à l'état solide est supérieure ou égale à 800 Hz.

11. Système de source lumineuse selon l'une quelconque des revendications 1 à 10, dans lequel
chacun du premier élément de conversion de longueur d'onde et du second élément de conversion de longueur d'onde inclut un élément sélectionné parmi le groupe constitué de Pr, Tb, Ho, Dy, Er, Eu, Nd et Mn.
